# FASCICULE DE BREVET EUROPEEN

(11) **EP 1 609 358 B1**
(45) Date de publication et mention de la délivrance du brevet: **27.09.2006**
(21) Numéro de dépôt: 05291304.3
(22) Date de dépôt: 17.06.2005
(51) Int. Cl.: A01M 7/00

(54) **Ensemble de rampe pendulaire et pulvérisateur équipé d'un tel ensemble**
Pendelrampeinrichtung und Sprühgerät mit solcher Einrichtung
Pendular ramp assembly and sprayer with such an assembly

(30) Priorité: 21.06.2004 FR 0406715
(43) Date de publication de la demande: 28.12.2005
(73) Titulaire: EXEL INDUSTRIES, 51200 Epernay (FR)
(72) Inventeur: Ballu, Patrick, 51100 Reims (FR)
(74) Mandataire: Gaillarde, Frédéric F. Ch.

(56) Documents cités:
- FR-A- 2 520 264
- FR-A- 2 532 817
- FR-A- 2 619 676
- FR-A- 2 813 212

## Description

La présente invention se rapport à un ensemble de rampe pendulaire, et à un pulvérisateur équipé d'un tel ensemble.

On connaît de la technique antérieure (voir par exemple document FR-A-2 520 264) un ensemble de rampe pendulaire, comprenant :
- a) un châssis fixe,
- b) une rampe de pulvérisation,
- c) deux vérins permettant sélectivement :
   - de faire varier la hauteur de ladite rampe entre une position où cette rampe est bloquée par rapport audit châssis fixe et au moins une position où cette rampe est suspendue de manière pendulaire sur ledit châssis fixe, et
   - de régler le dévers de ladite rampe.

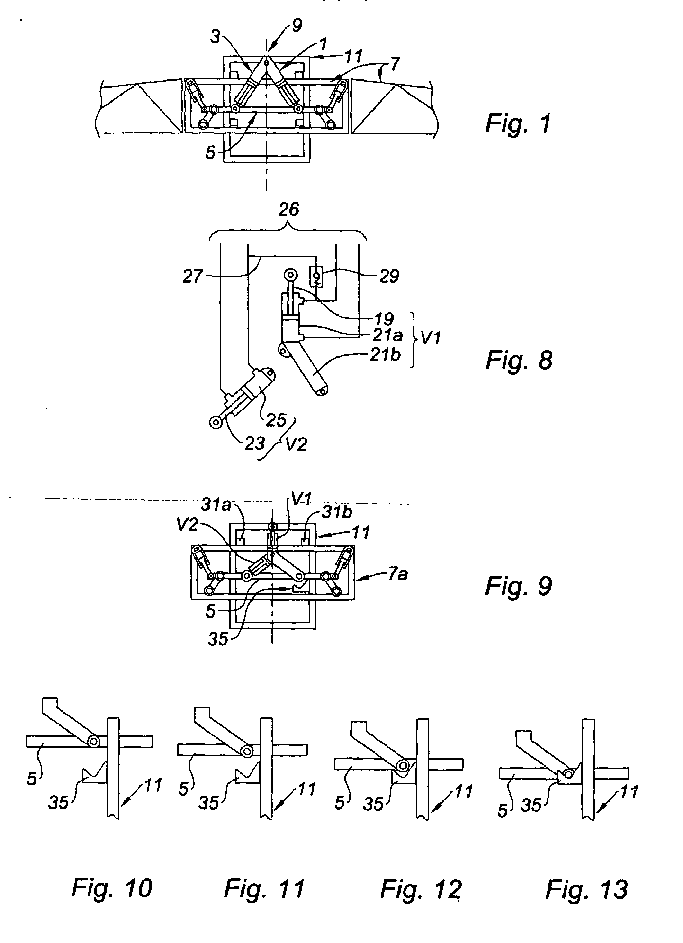

Dans cet ensemble de rampe pendulaire de la technique antérieure, représenté de manière schématique à la figure 1, les deux vérins 1, 3 sont disposés de manière symétrique.

En d'autres termes, ces deux vérins 1, 3 définissent un triangle sensiblement isocèle avec la partie 5 de la rampe 7 avec laquelle ils coopèrent, et se rejoignent en un point 9 commun sur le châssis fixe 11.

En pilotant convenablement ces deux vérins 1, 3, on peut en principe faire varier le mode de suspension (bloqué ou pendulaire) ainsi que le dévers de la rampe 7 par rapport au châssis fixe 11.

Toutefois, à l'usage, le pilotage de ces deux vérins 1, 3 s'avère assez compliqué, et il faut un réel savoir-faire pour réussir à obtenir un mode de suspension déterminé et/ou un dévers précis de la rampe 7.

En particulier, il est très difficile de modifier le mode de suspension sans faire varier le dévers de la rampe, et inversement.

La présente invention a notamment pour but de remédier à ces inconvénients.

On atteint ce but de l'invention avec un ensemble de rampe pendulaire selon la revendication 1, comprenant :
- a) un châssis fixe,
- b) une rampe de pulvérisation,
- c) deux vérins permettant sélectivement :
   - de faire varier la hauteur de ladite rampe entre une position où cette rampe est bloquée par rapport audit châssis fixe et au moins une position où cette rampe est suspendue de manière pendulaire sur ledit châssis fixe, et
   - de régler le dévers de ladite rampe,
l'un desdits vérins, appelé premier vérin, étant disposé entre ladite rampe et ledit châssis fixe,
remarquable en ce que l'autre desdits vérins, appelé deuxième vérin, est disposé entre ladite rampe et celle des deux parties dudit premier vérin qui coopère avec ladite rampe.

Grâce aux caractéristiques de cet ensemble de rampe selon l'invention, le réglage du premier vérin modifie uniquement la hauteur de la rampe et donc le mode de suspension, et le réglage du deuxième vérin modifie uniquement le dévers de la rampe.

On peut donc régler de manière tout à fait indépendante le mode de suspension et le dévers de la rampe, ce qui améliore considérablement la commodité et la précision de chacun de ces réglages.

Suivant d'autres caractéristiques de l'ensemble de rampe selon l'invention :
- la partie dudit premier vérin coopérant avec ladite rampe est coudée,
- la partie dudit premier vérin coopérant avec ladite rampe est sensiblement droite,
- cet ensemble de rampe comprend au moins une butée supérieure solidaire dudit châssis fixe et apte à bloquer le mouvement de ladite rampe vers le haut et autour d'un axe longitudinal,
- ladite rampe comprend une suspension à biellettes,
- cet ensemble de rampe comprend au moins une butée inférieure solidaire dudit châssis fixe et apte à bloquer ladite suspension pendulaire tout en autorisant le fonctionnement de ladite suspension à biellettes,
- cet ensemble comprend des moyens pour raccourcir automatiquement ledit premier vérin lorsque ladite rampe vient se bloquer sur ladite au moins une butée inférieure sous l'effet de l'allongement dudit deuxième vérin,
- lesdits moyens de raccourcissement automatique comprennent des moyens de mise en communication de fluide de la chambre sans tige dudit deuxième vérin avec la chambre à tige dudit premier vérin lorsque la pression de ladite chambre sans tige dépasse un seuil prédéterminé,
- cet ensemble de rampe comprend une unique butée inférieure pouvant présenter une forme en U, apte à recevoir l'extrémité inférieure dudit premier vérin.

La présente invention se rapporte également à un appareil de pulvérisation, remarquable en ce qu'il est équipé d'un ensemble de rampe conforme à ce qui précède.

D'autres caractéristiques et avantages de la présente invention apparaîtront à la lumière de la description qui va suivre et à l'examen du dessin annexé dans lequel :
- la figure 1 représente de manière schématique un ensemble de rampe de la technique antérieure tel que décrit ci avant,
- la figure 2 représente une vue schématique d'un ensemble de rampe conforme à la présente invention,
- les figures 3 à 7 représentent le mécanisme de suspension de l'ensemble de rampe de la figure 2 dans cinq configurations différentes,
- la figure 8 représente de manière schématique un circuit hydraulique pouvant équiper le système de suspension représenté sur les figures 3 à 7,
- la figure 9 représente de manière schématique une variante mécanique de la solution hydraulique représentée à la figure 8, et
- les figures 10 à 13 représentent un détail de la variante de la figure 9 dans quatre configurations analogues respectivement aux configurations des figures 3 à 6.

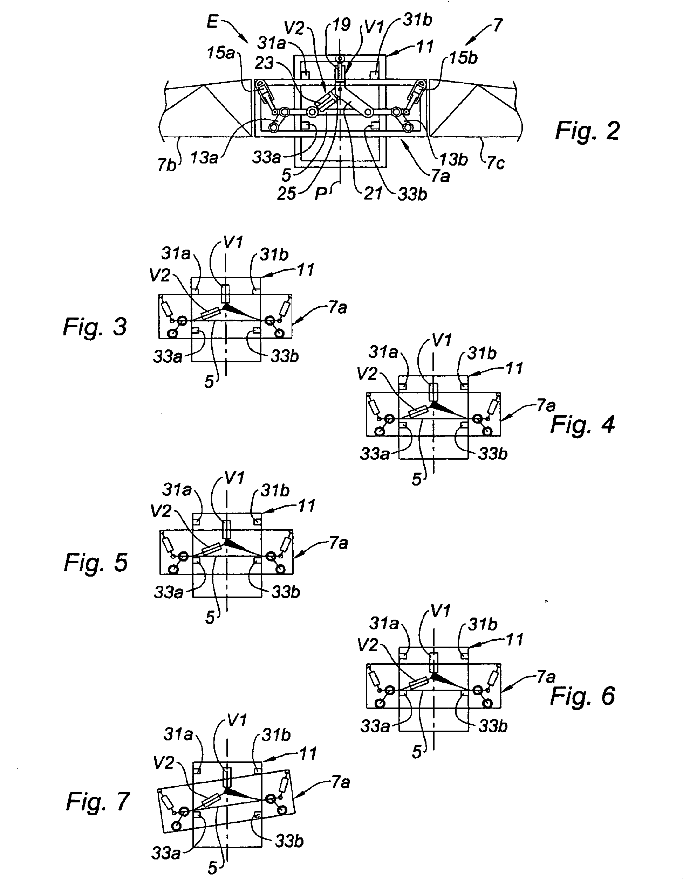

On se reporte à présent à la figure 2, sur laquelle on voit que l'ensemble de rampe E selon l'invention comprend des premiers V1 et deuxième V2 vérins permettant de relier une barre 5 faisant partie d'une rampe de pulvérisation 7 à un châssis fixe 11.

Plus précisément, la rampe 7 comprend un châssis mobile 7a présentant sensiblement une forme de cadre, disposé en face du châssis fixe 11.

Ce châssis mobile 7a supporte deux bras de rampe 7b, 7c disposés de part et d'autre de son plan médian P.

La barre 5 est reliée à la partie inférieure du châssis mobile 7a par l'intermédiaire de deux biellettes 13a, 13b.

Par ailleurs, la barre 5 est reliée à la partie supérieure du châssis mobile 7a par deux amortisseurs 15a, 15b pouvant être par exemple du type à huile ou à air.

La tige 19 du premier vérin V1 est montée pivotante sur la partie supérieure du châssis fixe 11, et le fût 21 de ce premier vérin est monté pivotant sur la barre 5.

La tige 23 du deuxième vérin V2 est montée pivotante sur la barre 5, et le fût 25 de ce deuxième vérin est monté pivotant sur le fût 21 du premier vérin V1.

En se reportant à la figure 8 sur laquelle on a représenté les deux vérins V1, V2 séparés l'un de l'autre pour faciliter la compréhension, on peut voir que ces deux vérins sont du type à double effet et qu'ils sont commandés par un circuit hydraulique 26 approprié.

On notera en particulier la présence optionnelle d'une conduite 27 comprenant un clapet anti-retour 29 permettant de mettre la chambre du premier vérin V1 dans laquelle se trouve la tige 19 à la même pression que la chambre du vérin V2 située à l'opposé de la tige 23 lorsque la pression de cette dernière chambre dépasse un seuil prédéterminé.

On notera également que, de préférence, le fût 21 du premier vérin V1 comporte d'une part une partie creuse 21a dans laquelle circule la tige 19 et son piston associé, et d'autre part une partie pleine 21b formant de préférence un coude avec la partie creuse 21a.

En se reportant de nouveau à la figure 2, on voit que le châssis 11 comporte, sur ses montants verticaux, d'une part une paire de butées supérieures 31a, 31b, et d'autre part une paire de butées inférieures 33a, 33b.

On va à présent étudier les différentes configurations possibles de l'ensemble de rampe qui vient d'être décrit.

On se reporte pour cela aux figures 3 à 7 sur lesquelles on a représenté uniquement le mécanisme de suspension de l'ensemble de rampe selon l'invention, dans un souci de simplification.

Le châssis fixe 11 est destiné à être monté fixe sur un engin tracteur non représenté.

Selon la morphologie du terrain sur lequel circule cet engin tracteur et la nature des opérations à effectuer, on peut être amené à choisir l'une des configurations suivantes.

Dans la configuration de la figure 3, les deux vérins V1, V2 sont réglés de manière que le châssis mobile 7a soit bloqué contre les butées supérieures 31a, 31b.

Dans cette configuration, le châssis mobile 7a ne peut pas bouger par rapport au châssis fixe 11.

La rampe 7 est donc totalement immobile par rapport à l'engin tracteur.

Cette configuration convient notamment en situation de transport, lorsque les deux bras 7b, 7c de la rampe sont repliés le long de l'engin tracteur et qu'il convient d'empêcher tout mouvement de ces deux bras.

Dans cette configuration, la suspension formée par la barre 5 et les biellettes 13a, 13b est inactive.

La configuration de la figure 4 se déduit de celle de la figure 3 par le fait que la longueur du premier vérin V1 a légèrement augmenté.

Grâce à cette légère augmentation, le châssis mobile 7a est légèrement descendu par rapport au châssis fixe 11, de sorte que la partie supérieure du châssis mobile 7a est séparée des deux butées supérieures 31a, 31b d'une distance sensiblement égale à celle séparant la barre 5 des deux butées inférieures 33a, 33b.

Dans cette configuration, le châssis mobile 7a et donc l'ensemble de la rampe 7 est suspendu de manière pendulaire sur le châssis fixe 11.

Cette configuration convient notamment lorsque l'engin tracteur circule sur un terrain fortement accidenté et permet de conserver le parallélisme de la rampe par rapport à ce terrain.

La configuration de la figure 5 se déduit de celle de la figure 4 par le fait que la longueur du premier vérin V1 a encore légèrement augmenté.

Dans cette configuration la distance séparant la partie supérieure du châssis mobile 7a des butées supérieures 31a 31b est plus grande que la distance séparant la barre 5 des butées inférieures 33a 33b.

Dans cette configuration, le châssis mobile 7a et donc la rampe 7 peut être animé d'un mouvement pendulaire de faible amplitude par rapport au châssis fixe 11.

Au-delà de cette faible amplitude, la barre 5 vient se bloquer contre l'une ou l'autre des butées inférieures 33a, 33b, et c'est alors la suspension à biellettes qui prend le relais.

Cette configuration convient notamment pour des terrains moyennement accidentés.

Dans la configuration de la figure 6, la longueur du premier vérin V1 est maximale, de sorte que la barre 5 est bloquée contre les butées inférieures 33a, 33b.

Dans cette configuration, aucun mouvement pendulaire du châssis mobile 7a par rapport au châssis fixe 11 n'est possible, et c'est la suspension à biellettes qui autorise l'intégralité des mouvements du châssis mobile 7a et donc de la rampe 7 par rapport au châssis fixe 11.

Cette configuration convient notamment lorsque l'engin tracteur circule sur des terrains présentant de faibles variations de dévers.

Sur la figure 7 on a représenté la manière dont on peut modifier volontairement le dévers du châssis mobile 7a et donc de la rampe 7 par rapport au châssis fixe 11.

La configuration de la figure 7 se déduit de celle de la figure 4 de la manière suivante : la longueur du premier vérin V1 est inchangé, et la longueur du deuxième vérin V2 a augmenté.

Comme cela est visible sur cette figure, la variation de dévers est limitée par l'une 31 b des butées supérieures et/ou l'une 33a des butées inférieures.

On comprend que si, à partir de la configuration de la figure 6, on souhaite modifier le dévers de la rampe 7 dans le sens opposé de celui de la figure 7, il suffit de raccourcir le deuxième vérin V2.

En revanche, si, à partir de la configuration de la figure 6, on souhaite faire varier le dévers de la rampe dans le même sens que celui de la figure 7, on est gêné par la butée inférieure 33a qui est en contact avec la barre 5.

On peut donc avantageusement prévoir le système d'égalisation de pression représenté à la figure 8.

Avec ce système, la montée en pression dans la chambre sans tige du fût 25 du deuxième vérin V2, liée au blocage de la barre 5 par la butée inférieure 33a, va avoir pour effet d'ouvrir le clapet 29 et ainsi d'augmenter la pression dans la chambre du premier vérin V1 où se trouve la tige 19.

En d'autres termes, en voulant rallonger le deuxième vérin V2, on va automatiquement raccourcir le premier vérin V1, ce qui va donc avoir pour effet de faire remonter le châssis mobile 7a par rapport au châssis fixe 11, et de permettre ainsi la rotation de celui-là par rapport à celui-ci dans le sens représenté à la figure 7.

Comme on peut le comprendre à la lumière de ce qui précède, le premier vérin V1 permet de modifier uniquement la hauteur du châssis mobile 7a par rapport au châssis fixe 11, et le deuxième vérin V2 permet de modifier uniquement le dévers de celui-là par rapport à celui-ci.

On peut donc régler de manière tout à fait indépendante d'une part la hauteur et donc le mode de suspension (blocage, pendulaire, pendulaire + biellettes, biellettes seulement) du châssis mobile 7a par rapport au châssis fixe 11, et d'autre part, le dévers de celui-là par rapport à celui-ci.

On s'affranchit de la sorte des difficultés de réglage de la technique antérieure.

On a représenté sur les figures 9 à 13 une variante du mode de réalisation qui vient d'être décrit.

On notera en particulier que les configurations représentées sur les vues de détail 10 à 13 sont analogues respectivement aux configurations des figures 3 à 6.

Comme on peut le voir sur la figure 9, cette variante se distingue du mode de réalisation qui vient d'être décrit essentiellement en ce que les deux butées inférieures 33a, 33b sont remplacées par une unique butée inférieure 35 fixée sur l'un des montants du châssis fixe 11, et apte à recevoir et à bloquer l'extrémité inférieure du premier vérin V1, c'est-à-dire l'extrémité de ce vérin qui coopère avec la barre 5.

Cette butée unique 35 peut présenter, comme cela est visible sur les figures 9 à 13, une forme de U dirigée vers le haut.

La fonction de cette butée unique 35 est la suivante.

Dans la configuration de la figure 10, le châssis mobile 7a est immobile par rapport au châssis fixe 11, et l'extrémité inférieure du premier vérin V1 est éloignée de la butée unique 35.

Dans la configuration de la figure 11, le châssis mobile 7a est animé d'un mouvement pendulaire par rapport au châssis fixe 11, et l'extrémité inférieure du premier vérin V1 est suffisamment éloignée de la butée fixe 35 pour que cette dernière ne gêne pas ce mouvement pendulaire.

Dans la configuration de la figure 12, l'extrémité inférieure du premier vérin V1 est située en partie dans la concavité de la butée unique 35, de sorte qu'un mouvement pendulaire d'amplitude limitée du châssis mobile 7a par rapport au châssis fixe 11 est possible.

Lorsque l'extrémité inférieure du premier vérin V1 vient au contact de l'une des faces de la butée unique 35, c'est la suspension à biellettes qui prend le relais, comme dans la configuration de la figure 5.

Dans la configuration de la figure 13, l'extrémité inférieure du premier vérin V1 est encastrée au fond de la butée unique 35.

Dans cette configuration, aucun mouvement pendulaire du châssis mobile 7a par rapport au châssis fixe 11 n'est possible.

En revanche, dans cette configuration, la suspension à biellettes est active.

On remarquera que dans chacune des configurations des figures 11 à 13, il est possible de faire varier le dévers du châssis mobile 7a par rapport au châssis fixe 11 dans l'un ou l'autre sens.

En effet, un allongement ou un raccourcissement de la longueur du deuxième vérin V2 ont tous deux pour effet de faire pivoter la barre 5 par rapport à l'extrémité inférieure du premier vérin V1.

Comme on peut donc le comprendre, cette variante à butée unique fournit une solution mécanique simple au problème susmentionné de variation de dévers, résolu de manière alternative par les moyens hydrauliques 27, 29 de la figure 8.

Bien entendu, la présente invention n'est pas limitée aux modes de réalisation décrits ci-dessus, fournis à titre d'exemple illustratif et non limitatif.

C'est ainsi par exemple que l'on pourrait envisager que le fût du premier vérin V1 coopère avec la partie supérieure du châssis fixe 11, que la tige de ce premier vérin V1 coopère avec la barre 5, et que le deuxième vérin V2 coopère avec ladite tige.

C'est ainsi également que l'on pourrait envisager que le fût du deuxième vérin V2 coopère avec la barre 5 et que la tige de ce deuxième vérin coopère avec le premier vérin V1.

C'est ainsi également que l'on pourrait envisager que le premier vérin présente d'autres formes que la forme coudée représentée sur les figures ci-annexées.

A titre d'exemple, ce vérin pourrait présenter une forme sensiblement droite classique.

## Revendications

1. Ensemble de rampe pendulaire (E), comprenant :
- a) un châssis fixe (11),
- b) une rampe de pulvérisation (7),
- c) deux vérins (V1, V2) permettant sélectivement :
- de faire varier la hauteur de ladite rampe (7) entre une position où cette rampe (7) est bloquée par rapport audit châssis fixe (11) et au moins une position où cette rampe (7) est suspendue de manière pendulaire sur ledit châssis fixe (11), et
- de régler le dévers de ladite rampe (7),
l'un (V1) desdits vérins, appelé premier vérin, étant disposé entre ladite rampe (7) et ledit châssis fixe (11),
**caractérisé en ce que** l'autre (V2) desdits vérins, appelé deuxième vérin, est disposé entre ladite rampe (7) et celle (21) des deux parties (19, 21) dudit premier vérin (V1) qui coopère avec ladite rampe (7).

2. Ensemble (E) selon la revendication 1, **caractérisé en ce que** la partie (21) dudit premier vérin (V1) coopérant avec ladite rampe (7) est coudée.

3. Ensemble (E) selon la revendication 1, **caractérisé en ce que** la partie dudit premier vérin coopérant avec ladite rampe est sensiblement droite.

4. Ensemble (E) selon l'une quelconque des revendications 1 à 3, **caractérisé en ce qu**'il comprend au moins une butée supérieure (31a, 31b) solidaire dudit châssis fixe (11) et apte à bloquer le mouvement de ladite rampe (7) vers le haut et autour d'un axe longitudinal.

5. Ensemble (E) selon l'une quelconque des revendications précédentes, **caractérisé en ce que** ladite rampe (7) comprend une suspension à biellettes (13a, 13b).

6. Ensemble (E) selon la revendication 5, **caractérisé en ce qu**'il comprend au moins une butée inférieure (33a, 33b) solidaire dudit châssis fixe (11) et apte à bloquer ladite suspension pendulaire tout en autorisant le fonctionnement de ladite suspension à biellettes.

7. Ensemble (E) selon la revendication 6, **caractérisé en ce qu**'il comprend des moyens (27, 29) pour raccourcir automatiquement ledit premier vérin (V1) lorsque ladite rampe (7) vient se bloquer sur ladite au moins une butée inférieure (33a, 33b) sous l'effet de l'allongement dudit deuxième vérin (V2).

8. Ensemble (E) selon la revendication 7, **caractérisé en ce que** lesdits moyens de raccourcissement automatique comprennent des moyens (27, 29) de mise en communication de fluide de la chambre sans tige dudit deuxième vérin (V2) avec la chambre à tige dudit premier vérin (V1) lorsque la pression de ladite chambre sans tige dépasse un seuil prédéterminé.

9. Ensemble (E) selon la revendication 6, **caractérisé en ce qu**'il comprend une unique butée inférieure (35) pouvant présenter une forme en U, apte à recevoir l'extrémité inférieure dudit premier vérin (V1).

10. Appareil de pulvérisation, **caractérisé en ce qu**'il est équipé d'un ensemble de rampe pendulaire (E) conforme à l'une quelconque des revendications précédentes.

## Claims

1. Pendular boom assembly (E), comprising:
- a) a fixed chassis (11),
- b) a sprayer boom (7),
- c) two actuators (V1, V2) for selectively:
- varying the height of said boom (7) between a position in which said boom (7) is locked to said fixed chassis (11) and at least one position in which said boom (7) is suspended in pendular manner from said fixed chassis (11), and
- adjusting the inclination of said boom (7),
a first actuator (V1) being disposed between said boom (7) and said fixed chassis (11),
**characterised in that** the second actuator (V2) is disposed between said boom (7) and that portion (21) of the two portions (19, 21) of said first actuator (V1) that cooperates with said boom (7).

2. Assembly (E) according to claim 1, **characterised in that** the portion (21) of said first actuator (V1) cooperating with said boom (7) is elbow-shaped.

3. Assembly (E) according to claim 1, **characterised in that** the portion of said first actuator cooperating with said boom is substantially straight.

4. Assembly (E) according to any one of claims 1 to 3, **characterised in that** it comprises at least one top stop (31 a, 31 b) fastened to said fixed chassis (11) and adapted to block upward movement of said boom (7) and its movement about a longitudinal axis.

5. Assembly (E) according to any one of the preceding claims, **characterised in that** said boom (7) comprises a suspension made up of links (13a, 13b).

6. Assembly (E) according to claim 5, **characterised in that** it comprises at least one bottom stop (33a, 33b) fastened to said fixed chassis (11) and adapted to immobilise said pendular suspension at the same time as allowing operation of said link suspension.

7. Assembly (E) according to claim 6, **characterised in that** it comprises means (27, 29) for automatically shortening said first actuator (V1) when said boom (7) is immobilised on said at least one bottom stop (33a, 33b) by extending said second actuator (V2).

8. Assembly (E) according to claim 7, **characterised in that** said automatic shortening means comprise means (27, 29) for establishing fluid communication of the chamber of said second actuator (V2) that does not contain its piston rod with the chamber of said first actuator (V1) that does contain its piston rod if the pressure of said chamber that does not contain its piston rod exceeds a predetermined threshold.

9. Assembly (E) according to claim 6, **characterised in that** it comprises a single bottom stop (35) that can have a U-shape adapted to receive the bottom end of said first actuator (V1).

10. Spraying apparatus, **characterised in that** it is equipped with a pendular boom assembly (E) according to any one of the preceding claims.

## Patentansprüche

1. Pendelrampeinrichtung (E), umfassend:
- a) ein feststehendes Gestell (11),
- b) eine Sprührampe (7),
- c) zwei Zylinder (Z1, Z2), die es selektiv ermöglichen:
- die Höhe der Rampe (7) zwischen einer Position zu verändern, in der die Rampe (7) im Verhältnis zu dem feststehenden Gestell (11) arretiert ist, und mindestens einer Position, in der die Rampe (7) pendelartig auf dem feststehenden Gestell (11) aufgehängt ist, und
- die Seitenneigung der Rampe (7) einzustellen,
wobei einer (Z1) der Zylinder, erster Zylinder genannt, zwischen der Rampe (7) und dem feststehenden Gestell (11) angeordnet ist,
**dadurch gekennzeichnet, dass** der andere (Z2) Zylinder, zweiter Zylinder genannt, zwischen der Rampe (7) und demjenigen (21) der beiden Teile (19, 21) des ersten Zylinders (Z1) angeordnet ist, der mit der Rampe (7) zusammenwirkt.

2. Einrichtung (E) nach Anspruch 1, **dadurch gekennzeichnet, dass** der Teil (21) des ersten Zylinders (Z1), der mit der Rampe (7) zusammenwirkt, abgewinkelt ist.

3. Einrichtung (E) nach Anspruch 1, **dadurch gekennzeichnet, dass** der Teil des ersten Zylinders, der mit der Rampe zusammenwirkt, im Wesentlichen gerade ist.

4. Einrichtung (E) nach einem der Ansprüche 1 bis 3, **dadurch gekennzeichnet, dass** sie mindestens einen oberen Anschlag (31a, 31b) umfasst, der mit dem feststehenden Gestell (11) fest verbunden und dazu geeignet ist, die Bewegung der Rampe (7) nach oben und um eine Längsachse zu arretieren.

5. Einrichtung (E) nach einem der vorhergehenden Ansprüche, **dadurch gekennzeichnet, dass** die Rampe (7) eine Stangenaufhängung (13a, 13b) umfasst.

6. Einrichtung (E) nach Anspruch 5, **dadurch gekennzeichnet, dass** sie mindestens einen unteren Anschlag (33a, 33b) umfasst, der mit dem feststehenden Gestell (11) fest verbunden und dazu geeignet ist, die Pendelaufhängung zu arretieren und zugleich die Funktion der Stangenaufhängung zu ermöglichen.

7. Einrichtung (E) nach Anspruch 6, **dadurch gekennzeichnet, dass** sie Mittel (27, 29) zum automatischen Verkürzen des ersten Zylinders (Z1) umfasst, wenn die Rampe (7) auf dem mindestens einen unteren Anschlag (33a, 33b) unter der Einwirkung der Verlängerung des zweiten Zylinders (Z2) arretiert wird.

8. Einrichtung (E) nach Anspruch 7, **dadurch gekennzeichnet, dass** die Mittel zum automatischen Verkürzen Mittel (27, 29) zum Herstellen einer Verbindung von Flüssigkeit der Kammer ohne Stange des zweiten Zylinders (Z2) mit der Kammer mit Stange des ersten Zylinders (Z1) umfassen, wenn der Druck der Kammer ohne Stange eine vorbestimmte Schwelle überschreitet.

9. Einrichtung (E) nach Anspruch 6, **dadurch gekennzeichnet, dass** sie einen einzigen unteren Anschlag (35) umfasst, der eine U-Form aufweisen kann und dazu geeignet ist, das untere Ende des ersten Zylinders (Z1) aufzunehmen.

10. Sprühgerät, **dadurch gekennzeichnet, dass** es mit einer Pendelrampeinrichtung (E) nach einem der vorhergehenden Ansprüche ausgestattet ist.
